# EUROPEAN PATENT APPLICATION

(11) **EP 2 613 553 A1**
(43) Date of publication of application: **10.07.2013**
(21) Application number: 12184512.7
(22) Date of filing: 14.09.2012
(51) Int. Cl.: H04N 21/431, H04N 21/482, H04N 5/445, H04N 21/41

(54) **Electronic apparatus and display control method**

(30) Priority: 06.01.2012 JP 2012001075
(71) Applicant: Kabushiki Kaisha Toshiba, Tokyo 105-8001 (JP)
(72) Inventor: Yamamoto, Sumihiko, Tokyo, 105-8001 (JP); Esaka, Naoki, Tokyo, 105-8001 (JP); Ozaki, Satoshi, Tokyo, 105-8001 (JP)
(74) Representative: Henkel, Breuer & Partner

(57) **Abstract**

According to one embodiment, an electronic apparatus includes a touch-screen display (17), a display controller (24) and an operation detector (21). The display controller (24) displays a first screen including a content area and plural areas. The content area includes objects indicative of video contents. In the areas, an operation of changing an object in the content area is input. The operation detector (21) detects a first operation in a first area of the areas, and a second operation in a second area of the areas. The display controller (24) displays, when the first operation has been detected, a second screen which is different from the first screen, and to change, when the second operation has been detected, the objects in the content area, and display the content area including the changed object.

## Description

Embodiments described herein relate generally to an electronic apparatus including a touch-screen display, and a display control method applied to the electronic apparatus.

In recent years, use has been made of a television (TV) receiver having a function of displaying an electronic program guide (EPG). A user manipulates the displayed electronic program guide, for example, by using a remote controller which is supplied with the TV receiver. Thereby, the user can confirm programs (video contents) which are to be broadcast, or can program to view the programs or to record the programs.

In addition, recently, an electronic apparatus including a touch-screen display, such as a tablet-type computer or a smartphone, has been gaining in popularity. On the touch-screen display, for example, an object by a graphical user interface (GUI), which is displayed on the screen, can be manipulated by fingers. Thus, the user can intuitively manipulate the object on the screen. In the electronic apparatus including the touch-screen display, an input operation, such as a tap operation or a flick operation, which makes use of the features of the touch-screen display, can be performed.

However, the electronic program guide presupposes an operation by the remote controller supplied with the TV receiver. Accordingly, if the electronic program guide is displayed on the touch-screen display, it is difficult to perform an operation which makes use of the features of the touch-screen display.

A general architecture that implements the various features of the embodiments will now be described with reference to the drawings. The drawings and the associated descriptions are provided to illustrate the embodiments and not to limit the scope of the invention.
FIG. 1 is an exemplary perspective view illustrating an example of the external appearance of an electronic apparatus according to an embodiment.
FIG. 2 is an exemplary block diagram illustrating an example of the system configuration of the electronic apparatus of the embodiment.
FIG. 3 is an exemplary view for describing an example of the structure of a program guide screen which is displayed by the electronic apparatus of the embodiment.
FIG. 4 is an exemplary block diagram illustrating an example of the functional configuration of a program guide application program which is executed by the electronic apparatus of the embodiment.
FIG. 5 is an exemplary view for describing an example of an operation of transitioning the program guide screen which is displayed by the electronic apparatus of the embodiment.
FIG. 6 is an exemplary view illustrating an example of a program guide page which is displayed by the electronic apparatus of the embodiment.
FIG. 7 is an exemplary view illustrating an example of a TV page which is displayed by the electronic apparatus of the embodiment.
FIG. 8 is an exemplary view illustrating an example of a search page which is displayed by the electronic apparatus of the embodiment.
FIG. 9 is an exemplary view for describing another example of the operation of transitioning the program guide screen which is displayed by the electronic apparatus of the embodiment.
FIG. 10 is an exemplary view for describing an example of an operation of switching a program guide which is displayed by the electronic apparatus of the embodiment.
FIG. 11 is an exemplary view for describing another example of the operation of changing the program guide which is displayed by the electronic apparatus of the embodiment.
FIG. 12 is an exemplary view illustrating another example of the TV page which is displayed by the electronic apparatus of the embodiment.
FIG. 13 is an exemplary view for describing an operation of scrolling an object in a content area which is displayed by the electronic apparatus of the embodiment.
FIG. 14 is an exemplary view illustrating an example of a slide bar for quickly scrolling an object in the content area which is displayed by the electronic apparatus of the embodiment.
FIG. 15 is an exemplary view illustrating an example of a remote-control screen which is displayed by the electronic apparatus of the embodiment.
FIG. 16 is an exemplary flowchart illustrating an example of the procedure of a display control process which is executed by the electronic apparatus of the embodiment.

Various embodiments will be described hereinafter with reference to the accompanying drawings.

In general, according to one embodiment, an electronic apparatus includes a touch-screen display, a display controller and an operation detector. The touch-screen display includes a touch panel and a display. The display controller is configured to display a first screen including a content area and a plurality of areas. The content area includes one or more objects indicative of one or more video contents. In the plurality of areas, an operation of changing an object in the content area is input. The operation detector is configured to detect a first operation using the touch panel in a first area of the plurality of areas, and a second operation using the touch panel in a second area of the plurality of areas. The display controller is configured to display, when the first operation has been detected, a second screen which is different from the first screen, and to change, when the second operation has been detected, the one or more objects in the content area, and display the content area including the changed object.

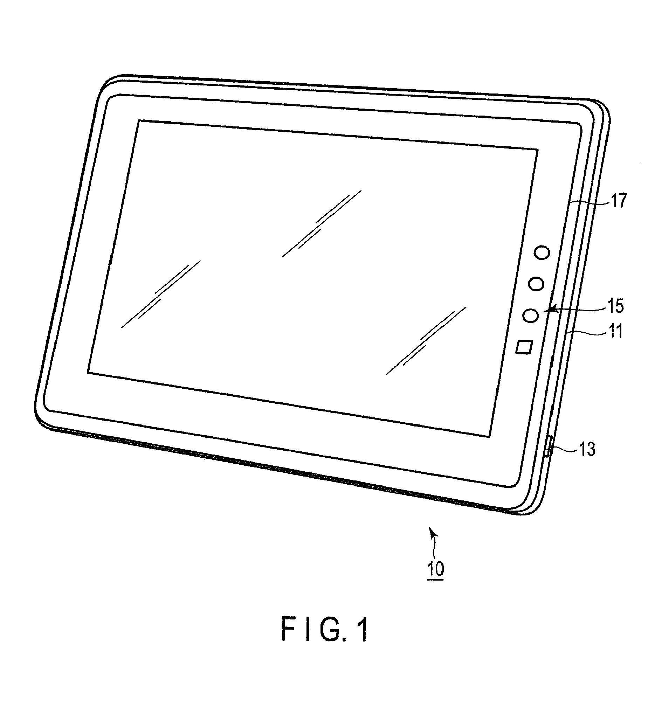

FIG. 1 is a perspective view illustrating the external appearance of an electronic apparatus according to an embodiment. This electronic apparatus is realized, for example, as a tablet-type personal computer (PC) 10. In addition, the electronic apparatus may be realized as a smartphone, a PDA, a notebook-type PC, etc. This electronic apparatus may be realized by connecting a computer and an external display device including a touch-screen display. As shown in FIG. 1, the computer 10 includes a computer main body 11 and a touch-screen display 17.

The computer main body 11 has a thin box-shaped housing. A liquid crystal display (LCD) and a touch panel are built in the touch-screen display 17. The touch panel is provided so as to cover the screen of the LCD. The touch-screen display 17 is attached to the computer main body 11 in such a manner that the touch-screen display 17 is laid over the top surface of the computer main body 11. In addition, operation buttons 15 are disposed at an end portion surrounding the screen of the LCD.

A power button for powering on/off the computer 10, a volume control button, a memory card slot, etc. are disposed on an upper side surface of the computer main body 11. A speaker, etc. are disposed on a lower side surface of the computer main body 11. A right side surface of the computer main body 11 is provided with, for example, a universal serial bus (USB) connector 13 for connection to a USB cable or a USB device of, e.g. the USB 2.0 standard.

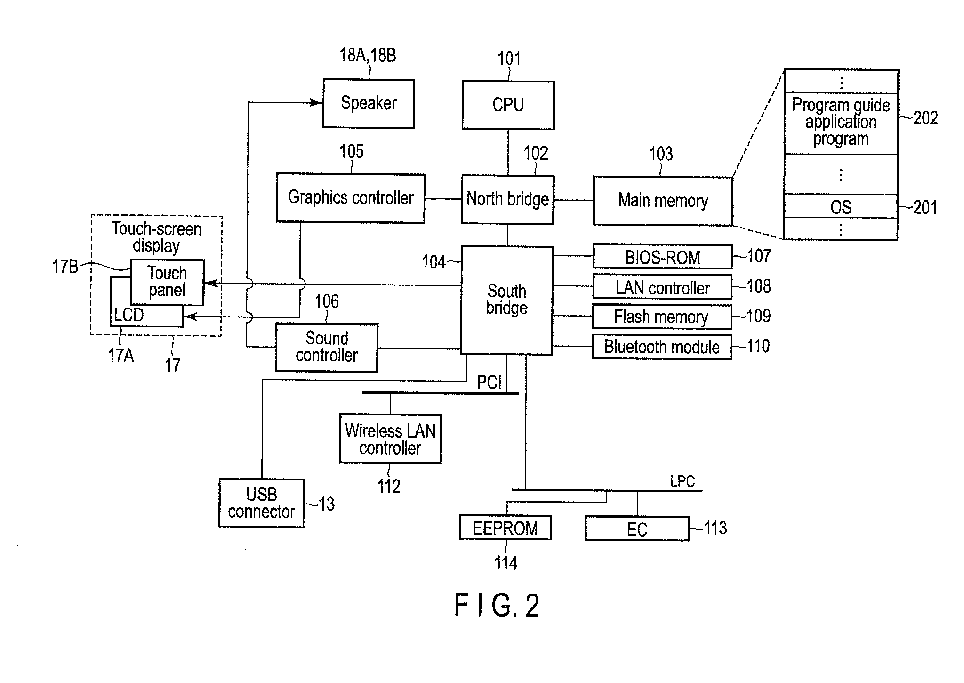

FIG. 2 shows the system configuration of the computer 10.

The computer 10, as shown in FIG. 2, includes a CPU 101, a north bridge 102, a main memory 103, a south bridge 104, a graphics controller 105, a sound controller 106, a BIOS-ROM 107, a LAN controller 108, a flash memory 109, a Bluetooth^{®} module 110, a wireless LAN controller 112, an embedded controller (EC) 113, and an EEPROM 114.

The CPU 101 is a processor for controlling the operation of the respective components of the computer 10. The CPU 101 executes an operating system (OS) 201 and various application programs, such as a program guide application program 202, which are loaded from the flash memory 109 into the main memory 103. The program guide application program 202 includes a function of displaying a program guide screen which includes a list of objects indicative of programs (i.e. video contents). For example, the program guide application program 202 displays a program guide of programs which are broadcast by terrestrial digital broadcasting, BS/CS digital broadcasting, cable TV broadcasting, satellite broadcasting, etc., and a list of video contents (items of video content data) which is delivered by Video On Demand (VOD). The program guide application program 202 changes content which is displayed on the program guide screen, for example, in accordance with an operation using a touch panel 17B. In addition, the program guide application program 202 can execute such control that a program selected by using the program guide screen is displayed on the display (e.g. LCD 17 or an external display device, such as a TV receiver connected via a network, etc.).

Besides, the CPU 101 executes a BIOS that is stored in the BIOS-ROM 107. The BIOS is a program for hardware control.

The north bridge 102 is a bridge device which connects a local bus of the CPU 101 and the south bridge 104. The north bridge 102 includes a memory controller which access-controls the main memory 103. The north bridge 102 also has a function of communicating with the graphics controller 105 via, e.g. a PCI EXPRESS serial bus.

The graphics controller 105 is a display controller which controls an LCD 17A that is used as a display monitor of the computer 10. A display signal, which is generated by the graphics controller 105, is sent to the LCD 17A. The LCD 17A displays video, based on the display signal.

The south bridge 104 controls devices on a peripheral component interconnect (PCI) bus and devices on a low pin count (LPC) bus. The south bridge 104 includes an integrated drive electronics (IDE) controller for controlling the flash memory 109.

The south bridge 104 includes a USB controller for controlling the touch panel 17B. The touch panel 17B is a pointing device for executing an input on the screen of the LCD 17A. The user can manipulate an object of a graphical user interface (GUI) or the like, which is displayed on the screen of the LCD 17A, by using the touch panel 17B. For example, by touching (tapping) an object displayed on the screen, the user can instruct execution of a function which is associated with the operation of touching the object. In addition, by flicking an object area displayed on the screen, the user can instruct execution of a function which is associated with the operation of flicking the object. Besides, the USB controller communicates with an external device, for example, via a cable of the USB 2.0 standard which is connected to the USB connector 13.

The south bridge 104 also has a function of communicating with the sound controller 106. The sound controller 106 is a sound source device and outputs audio data, which is a target of playback, to the speakers 18A and 18B. The LAN controller 108 is a wired communication device which executes wired communication of, e.g. the IEEE 802.3 standard. The wireless LAN controller 112 is a wireless communication device which executes wireless communication of, e.g. the IEEE 802.11g standard. The Bluetooth module 110 is a communication module which executes Bluetooth communication with an external device.

The EC 113 is a one-chip microcomputer including an embedded controller for power management. The EC 113 has a function of powering on/off the computer 10 in accordance with the user's operation of the power button.

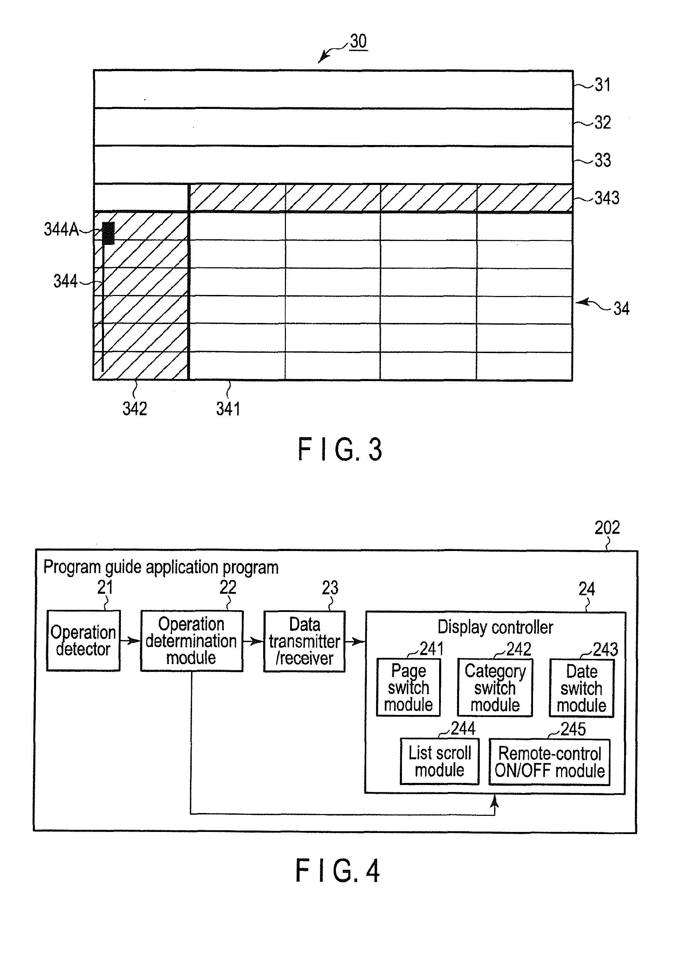

FIG. 3 shows an example of the structure of a program guide screen 30 which is displayed by the program guide application program 202. On the program guide screen 30, a plurality of types of screens can be switched and displayed. Each of the plurality of types of screens is referred to as "page". The pages, which are switched on the program guide screen 30, include, for instance, a program guide page on which a program guide is displayed; a TV page on which a list of thumbnail images indicative of programs is displayed; a movie page on which a list of thumbnail images indicative of movies is displayed; and a search page for performing a search. The structure in the program guide screen 30 is changed according to pages. The program guide screen 30 shown in FIG. 3 is an example of the page which displays the program guide.

The program guide screen 30 includes, for example, a page switch area 31, a category switch area 32, a date switch area 33 and a content area 34.

The page switch area (first area) 31 is an area for inputting an operation (first operation) of switching a page (i.e. the entirety of the program guide screen 30). The category switch area (second area) 32 is an area for inputting an operation (second operation) of changing the category of programs (video contents) which are displayed in the content area 34. The date switch area (third area) 33 is an area for inputting an operation (fourth operation) of switching, in units of a day, a time period corresponding to programs which are displayed in the content area 34. The page switch area 31, category switch area 32 and date switch area 33 are, for example, strip-shaped areas.

The content area 34 includes one or more objects indicative of one or more video contents (one or more programs). The content area 34 includes, for example, one or more objects which are arranged based on the broad cast date/time and broadcast channel of each of one or more video contents. In addition, the content area 34 is an area for inputting an operation on the displayed one or more objects. Specifically, the content area 34 includes, for example, a program guide area 341, a channel area 342, a time area 343 and a slide bar 344.

In the program guide area 341, a program guide is displayed. By using the program guide area 341, an operation of changing the display content (display range) of the program guide is input. In the time area 343, times, which correspond to the display range of the program guide in the program guide area 341, are displayed. By using the time area 343, an operation of changing the display content (display period) relating to times in the program guide is input. In addition, in the channel area 342, channels, which correspond to the display range of the program guide displayed in the program guide area 341, are displayed. By using the channel area 342, an operation of changing the display content (the range of displayed channels) relating to channels in the program guide is input.

In the program guide area 341, a plurality of objects (items) indicative of a plurality of programs are disposed in a two-dimensional area (matrix-shaped area) based on times indicated in the time area 343 and channels indicated in the channel area 342. An object corresponding to a certain program is disposed at a position in a vertical direction, which corresponds to the channel on which this program is broadcast, and at a position (range) in a horizontal direction, which corresponds to a time zone in which this program is broadcast. In addition, on the slide bar 344, an operation is input for quickly changing (scrolling) objects displayed in the channel display area 342.

The program guide area 341 displays a program guide by using program guide data indicative of programs which are to be broadcast within a predetermined period (e.g. two weeks) on a predetermined number of channels (e.g. 300 channels). However, because of the size of the screen or the size (font size) of characters, there is a limit to the range of the program guide which can be displayed at a time in the program guide area 341. Thus, the program guide area 341 displays, for example, a program guide including programs which are broadcast within four hours (e.g. 7:00 p.m. to 11:00 p.m.) on nine channels (e.g. 224 channel to 232 channel). In accordance with an operation on the program guide area 341, channel area 342, time area 343 and slide bar 344, the range of the program guide that is displayed in the program display area 341 is changed.

In each of the page switch area 31, category switch area 32, date switch area 33, program guide area 341, channel area 342, and time area 343, a flick operation, for example, is executed, and thereby the content of the program guide screen 30 is switched. In addition, on the slide bar 344, an operation of dragging a dial 344A on the slide bar 344 is performed, and thereby the content of the program guide screen 30 is switched.

FIG. 4 illustrates an example of the configuration of the program guide application program 202. The program guide application program 202 includes a function of displaying the above-described program guide screen 30, and changes and displays the content of the program guide screen 30 in accordance with an operation using the touch panel 17B. The program guide application program 202 includes an operation detector 21, an operation determination module 22, a data transmitter/receiver 23, and a display controller 24.

The operation detector 21 detects an operation using the touch panel 17B. The detected operation is, for instance, a tap operation, a flick operation, a drag operation or a touch operation on the touch panel 17B. The operation detector 21 outputs operation information, which is indicative of the kind of the detected operation and the position at which the operation was detected, to the operation determination module 22.

The operation determination module 22 determines the operation, based on the operation information output from the operation detector 21. To be more specific, the operation determination module 22 determines whether the operation information is indicative of an operation (first operation) of switching a page, an operation (second operation) of switching a category, an operation (third operation) of scrolling a list, an operation (fourth operation) of switching a date, or an operation of displaying a remote-control screen. The operation determination module 22 determines that a flick operation in the page switch area 31 is the page switching operation. The operation determination module 22 determines that a flick operation in the category switch area 32 is the category switching operation. The operation determination module 22 determines that a flick operation in the date switch area 33 is the date switching operation. The operation determination module 22 determines that a flick operation in the content area 34 (program guide area 341, channel area 342, time area 343) is the list scroll operation. Then, the operation detector 22 notifies the data transmitter/receiver 23 and display controller 24 which of the operations has been executed. In the meantime, the list is, for instance, a program guide or a list of video contents.

In response to the notification from the operation determination module 22, the data transmitter/receiver 23 requests a server (EPG server) to transmit data, which is necessary for changing (switching) the content displayed on the screen. The server is connected via a network, etc. Specifically, when the data transmitter/receiver 23 has been notified that the page switching operation has been executed, the data transmitter/receiver 23 requests the server to transmit data for displaying a new page (second screen) which is different from a currently displayed page (first screen). When the data transmitter/receiver 23 has been notified that the category switching operation has been executed, the data transmitter/receiver 23 requests the server to transmit data for displaying a list corresponding to a new category. When the data transmitter/receiver 23 has been notified that the date switching operation has been executed, the data transmitter/receiver 23 requests the server to transmit data for displaying a list of a new date. When the data transmitter/receiver 23 has been notified that the list scroll operation has been executed, the data transmitter/receiver 23 requests the server to transmit data for displaying a list of a new display range. The list of the new display range includes, for example, objects indicative of video contents which are different, with respect to broadcast times and/or broadcast channels, from the video contents corresponding to objects which are currently displayed in the content area 34. Incidentally, when the data necessary for changing (switching) the content displayed on the screen has already been received and cached in the memory 103, there is no need to issue a request to the server, and the cached data may be used.

Then, the transmitter/receiver 23 receives the data transmitted from the server. The data from the server includes, for example, data for displaying a program guide, or data for displaying a list of video contents. Accordingly, the data from the server includes data relating to, e.g. broadcast channels of programs (video contents), titles of programs, start/end dates/times of programs, and thumbnail images indicative of programs. The data transmitter/receiver 23 outputs the received data to the display controller 24.

Subsequently, the display controller 24 displays the program guide screen 30 corresponding to the notification from the operation determination module 22. The display controller 24 includes a page switch module 241, a category switch module 242, a date switch module 243, a list scroll module 244, and a remote-control ON/OFF module 245.

When the notification from the operation determination module 22 indicates the page switching operation, the page switch module 241 displays a new page by using the data output from the data transmitter/receiver 23. Specifically, the page switch module 241 displays the program guide screen 30 (second screen) including the new page.

When the notification from the operation determination module 22 indicates the category switching operation, the category switch module 242 displays, in the content area 34, a list corresponding to a new category by using the data output from the data transmitter/receiver 23. Specifically, the category switch module 242 changes the objects in the list displayed in the content area 34 to objects belonging to the new category, and displays in the content area 34 the list including the changed objects. In the meantime, when the notification from the operation determination module 22 indicates the category switching operation, the category switch module 242 may detect a channel satisfying a predetermined condition (e.g. a channel belonging to a specific category), from among the broadcast channels of the video contents corresponding to the objects which are currently displayed in the content area 34. In this case, the category switch module 242 displays in the content area 34 a list including objects indicative of video contents which are broadcast on the detected channel.

When the notification from the operation determination module 22 indicates the date switching operation, the date switch module 243 displays a list for a new date by using the data output from the data transmitter/receiver 23. Specifically, the date switch module 243 changes the list displayed in the content area 34 to the list for the new date, and displays this list. In the meantime, the date switch module 243 may not only switch a day-by-day list, but may also display in the content area 34 a list which is earlier than the currently displayed list by a predetermined time (first time), or a list which is later than the currently displayed list by the predetermined time. In this case, assuming that the video contents corresponding to the currently displayed objects in the content area 34 are broadcast in a first time zone, the date switch module 243 displays in the content area 34 a list including one or more objects indicative of either one or more video contents broadcast in a second time zone which is earlier than a first time zone by a predetermined time (e.g. twelve hours) a first time zone, or one or more video contents which are broadcast in a third time zone which is later than the first time zone by the predetermined time.

When the notification from the operation determination module 22 indicates the list scroll operation, the list scroll module 244 scrolls the list of the current display range to a list of a new display range (i.e. successively varies the objects that are displayed) by using the data output from the data transmitter/receiver 23, and displays the list of the new display range. Specifically, the list scroll module 244 changes the current list to a list including first objects indicative of a first video content, which are different, with respect to broadcast times and/or broadcast channels, from the video contents corresponding to objects which are currently displayed in the content area 34, and then displays the list including the first objects.

The remote-control ON/OFF module 245 displays/dismisses a remote-control screen when the notification from the operation determination module 22 indicates the remote-control display operation.

By the above-described structure, a video content, which is to be viewed, can easily be searched from a plurality of video contents, by an intuitive operation using the touch-screen display 17.

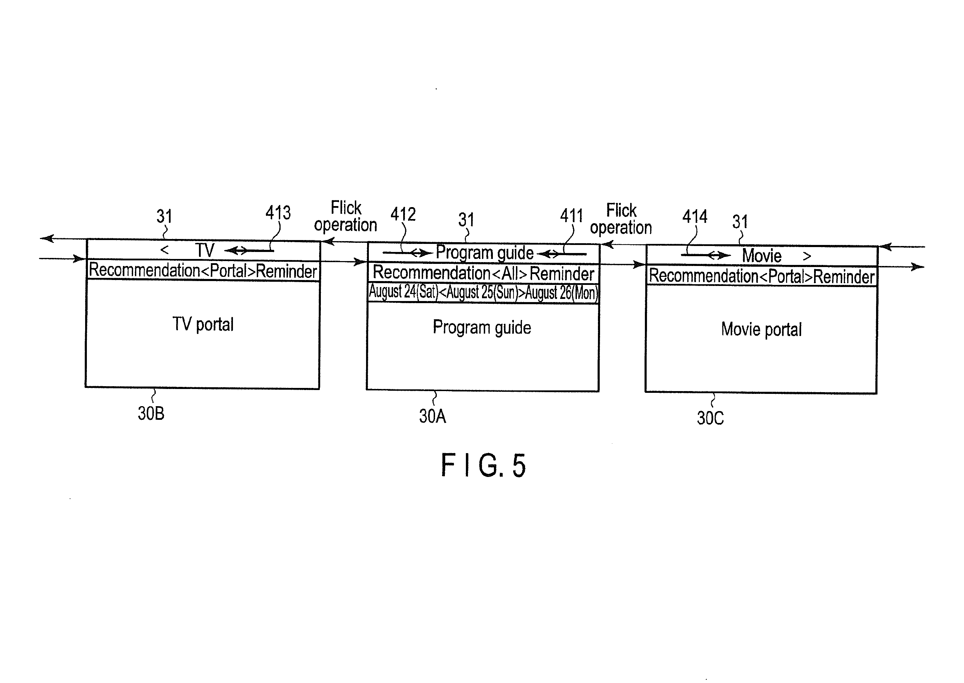

Next, referring to FIGS. 5 to 15, a description is given of operations on the program guide screen 30 which are controlled by the program guide application program 202.

FIG. 5 illustrates an example of a screen transition corresponding to a flick operation on the page switch area 31. Pages can be switched in response to a flick operation in the page switch area 31. As described above, the pages include a program guide page 30A, a TV page 30B, a movie page 30C and a search page 30D. Since the order of arrangement of these pages is preset, the pages are successively switched in accordance with a flick operation in the page switch area 31.

For example, when the program guide page 30A is displayed, the program guide page 30A is switched to the movie page 30C in response to a leftward flick operation 411 in the page switch area 31. When the program guide page 30A is displayed, the program guide page 30A is switched to the TV page 30B in response to a rightward flick operation 412 in the page switch area 31. When the TV page 30B is displayed, the TV page 30B is switched to the program guide page 30A in response to a leftward flick operation 413 in the page switch area 31. When the movie page 30C is displayed, the movie page 30C is switched to the program guide page 30A in response to a rightward flick operation 414 in the page switch area 31.

In the above-described screen transition, effects (three-dimensional effects) may be used so that the user can intuitively recognize that a first screen is being switched to a second screen in response to a flick operation. For example, effects are used to indicate switching from the first screen to the second screen in such a manner that the page is turned over in accordance with the movement of the finger in the flick operation (the movement of the contact point on the touch panel 17B). In addition, by the above-described flick operation, other pages, such as a search page, can be similarly switched.

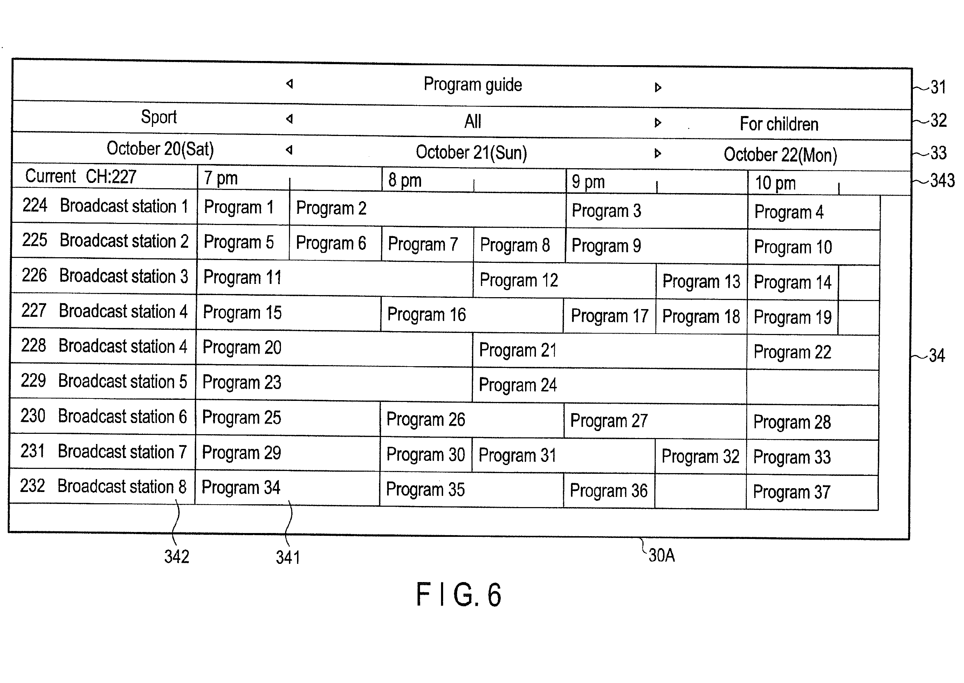

Next, referring to FIG. 6, an example of the program guide page 30A is described. In the program guide page 30A, a program guide within a predetermined period (e.g. two weeks) can be viewed. This predetermined period indicates, for example, that the server can provide program data of programs which are broadcast within this predetermined period. As described above, the program guide page 30A includes, for example, the page switch area 31, category switch area 32, date switch area 33 and content area 34. In addition, the content area 34 includes the program guide area 341, channel area 342 and time area 343.

The page switch area 31, as described above, is an area for inputting an operation of switching the program guide page 30A to another page (TV page 30B, movie page 30C, etc.). For example, the program guide page 30A is switched to another page in response to a flick operation (e.g. a flick operation in the horizontal direction) in the page switch area 31.

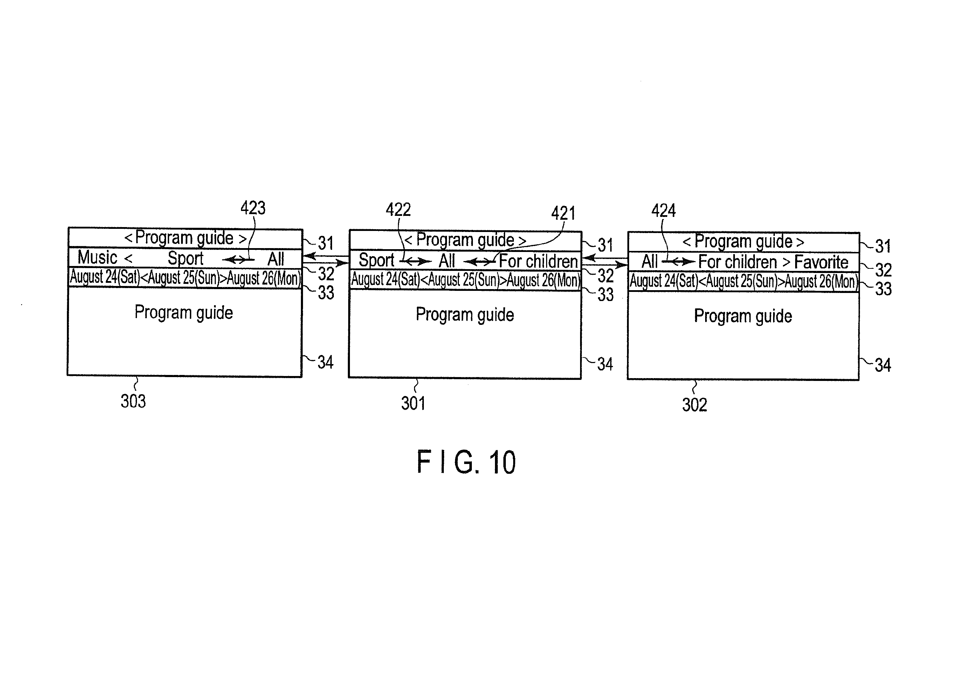

In the category switch area 32, a category ("All") corresponding to the program guide, which is currently displayed in the program guide area 341, is displayed. In the category switch area 32, an operation of narrowing down the category of programs in the program guide is input. Categories include, for instance, "All", "Sports", "For children", "Music" and "News". For example, in response to a flick operation (e.g. a horizontal flick operation) in the category switch area 32, the program guide including programs of the category "All" is switched to a program guide including only programs of "Sports". The switching of the category will be described later with reference to FIG. 10.

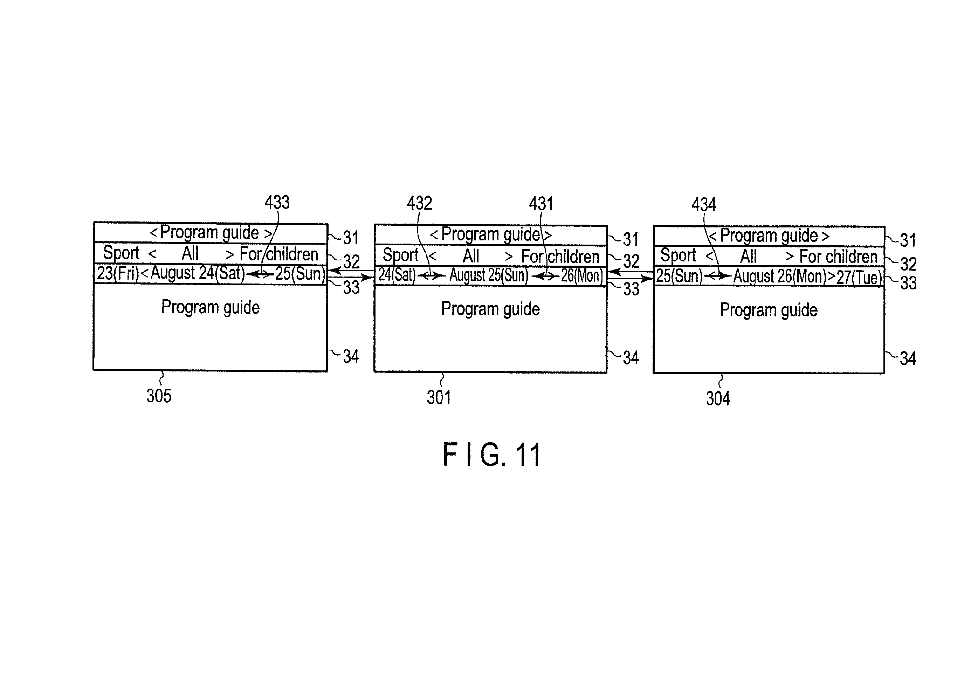

In the date switch area 33, the date corresponding to the program guide, which is currently displayed in the program guide area 341, is displayed. In the date switch area 33, an operation of switching, in units of a day, the period corresponding to the program guide displayed in the program guide area 341 is input. For example, when the program guide of October 21 is displayed, this program guide is switched to a program guide of October 20 or a program guide of October 22 in response to a flick operation (e.g. a horizontal flick operation) in the date switch area 33. The switching of the date will be described later with reference to FIG. 11.

The channel area 342 displays channel numbers corresponding to the program guide which is currently displayed in the program guide area 341, and names or logo images of broadcast stations which are associated with the channel numbers. In the channel area 342, an operation of changing the range of channels of the program guide, which is displayed in the program guide area 341, is input. For example, when the program guide of 224 channel to 232 channel is displayed, a program guide corresponding to a channel range including channel numbers which are lower than 224 channel, or a program guide corresponding to a channel range including channel numbers which are higher than 232 channel, is scrolled and displayed in response to a flick operation (e.g. a vertical flick operation) in the channel area 342. To be more specific, when the program guide of 224 channel to 232 channel is displayed, a program guide corresponding to a channel range (e.g. 220 channel to 228 channel) including channel numbers, which are lower than 224 channel, is scrolled and displayed in response to a downward flick operation in the channel area 342. In addition, when the program guide of 224 channel to 232 channel is displayed, a program guide corresponding to a channel range (e.g. 228 channel to 236 channel) including channel numbers, which are higher than 232 channel, is scrolled and displayed in response to an upward flick operation in the channel area 342. In this scroll display, for example, the program guide is scrolled by a predetermined number of channels, each time a single flick operation is executed. In the meantime, the amount of movement of channels (channel range) in the scroll display may be determined based on the amount of movement, acceleration, etc. of the finger (the contact point on the touch panel 17B) in the flick operation.

In addition, plural channels may be associated with categories, respectively. In this case, in accordance with a flick operation in the category switch area 32, channels are narrowed down. Accordingly, when the category has been switched to "Sports" by a flick operation in the category switch area 32, only programs, which are broadcast on channels associated with "Sports", are displayed in the program guide.

The time area 343 displays times corresponding to the program guide which is currently displayed in the program guide area 341. In the time area 343, an operation of changing the time zone of the program guide, which is displayed in the program guide area 341, is input. For example, when a program guide of 7:00 p.m. to 11:00 p.m. is displayed, a program guide corresponding to a time zone including a time before 7:00 p.m., or a program guide corresponding to a time zone including a time after 11:00 p.m., is scrolled and displayed in response to a flick operation (e.g. a horizontal flick operation) in the time area 343. To be more specific, when the program guide of 7:00 p.m. to 11:00 p.m. is displayed, a program guide corresponding to a time zone (e.g. 5:00 p.m. to 9:00 p.m.) including a time before 7:00 p.m. is scrolled and displayed in response to a rightward flick operation in the time area 343. In addition, when the program guide of 7:00 p.m. to 11:00 p.m. is displayed, a program guide corresponding to a time zone (e.g. 9:00 p.m. to 1:00 a.m.) including a time after 11:00 p.m. is scrolled and displayed in response to a leftward flick operation in the time area 343. In this scroll display, for example, the program guide is scrolled by a predetermined time, each time a single flick operation is executed. In the meantime, the amount of movement of time (time zone) in the scroll display may be determined based on the amount of movement, acceleration, etc. of the finger in the flick operation.

In the program guide area 341, a plurality of objects indicative of a plurality of programs are disposed in a two-dimensional area (matrix-shaped area) based on times indicated in the time area 343 and channels indicated in the channel area 342. An object corresponding to a certain program is disposed at a position in the vertical direction, which corresponds to the channel on which this program is broadcast, and at a position (range) in the horizontal direction, which corresponds to a time zone in which this program is broadcast. In addition, information, such as the title of the program, is displayed in the object. For example, in the program guide area 341 shown in FIG. 6, it is understood that "Program 1" is broadcast on 224 channel (Broadcast station 1) in a time zone of 7:00 p.m. to 7:30 p.m. In addition, it is understood that "Program 15" is broadcast on 227 channel (Broadcast station 4) in a time zone of 7:00 p.m. to 8:00 p.m.

In the program guide area 341, an operation of changing the time zone of the program guide displayed in the program guide area 341, an operation of changing the channel range, or an operation of changing the time zone and channel range, is input. For example, when the program guide of 7:00 p.m. to 11:00 p.m. is displayed, a program guide corresponding to a time zone including a time before 7:00 p.m., or a program guide corresponding to a time zone including a time after 11:00 p.m., is scrolled and displayed in response to a horizontal flick operation in the program guide area 341. To be more specific, when the program guide of 7:00 p.m. to 11:00 p.m. is displayed, a program guide corresponding to a time zone (e.g. 5:00 p.m. to 9:00 p.m.) including a time before 7:00 p.m. is scrolled and displayed in response to a rightward flick operation in the program guide area 341. In addition, when the program guide of 7:00 p.m. to 11:00 p.m. is displayed, a program guide corresponding to a time zone (e.g. 9:00 p.m. to 1:00 a.m.) including a time after 11:00 p.m. is scrolled and displayed in response to a leftward flick operation in the program guide area 341.

Besides, for example, when the program guide of 224 channel to 232 channel is displayed, a program guide corresponding to a channel range including channel numbers which are lower than 224 channel, or a program guide corresponding to a channel range including channel numbers which are higher than 232 channel, is scrolled and displayed in response to a vertical flick operation in the program guide area 341. To be more specific, when the program guide of 224 channel to 232 channel is displayed, a program guide corresponding to a channel range (e.g. 220 channel to 228 channel) including channel numbers, which are lower than 224 channel, is scrolled and displayed in response to a downward flick operation in the program guide area 341. In addition, when the program guide of 224 channel to 232 channel is displayed, a program guide corresponding to a channel range (e.g. 228 channel to 236 channel) including channel numbers, which are higher than 232 channel, is scrolled and displayed in response to an upward flick operation in the program guide area 341.

Furthermore, for example, when the program guide of 224 channel to 232 channel and of 7:00 p.m. to 11:00 p.m. is displayed, a program guide corresponding to a channel range including channel numbers which are lower than 224 channel and corresponding to a time zone including a time before 7:00 p.m., a program guide corresponding to a channel range including channel numbers which are higher than 232 channel and corresponding to a time zone including a time before 7:00 p.m., a program guide corresponding to a channel range including channel numbers which are lower than 224 channel and corresponding to a time zone including a time after 11:00 p.m., or a program guide corresponding to a channel range including channel numbers which are higher than 232 channel and corresponding to a time zone including a time after 11:00 p.m., is scrolled and displayed in response to a flick operation in a diagonal (oblique) direction in the program guide area 341.

To be more specific, when the program guide of 224 channel to 232 channel and of 7:00 p.m. to 11:00 p.m. is displayed, a program guide corresponding to a channel range (e.g. 220 channel to 228 channel) including channel numbers which are lower than 224 channel and corresponding to a time zone (e.g. 5:00 p.m. to 9:00 p.m.) including a time before 7:00 p.m., is scrolled and displayed in response to a flick operation in a diagonal direction from the upper left to the lower right in the program guide area 341. For example, when the program guide of 224 channel to 232 channel and of 7:00 p.m. to 11:00 p.m. is displayed, a program guide corresponding to a channel range (e.g. 228 channel to 236 channel) including channel numbers which are higher than 232 channel and corresponding to a time zone (e.g. 5:00 p.m. to 9:00 p.m.) including a time before 7:00 p.m., is scrolled and displayed in response to a flick operation in a diagonal direction from the lower left to the upper right in the program guide area 341. For example, when the program guide of 224 channel to 232 channel and of 7:00 p.m. to 11:00 p.m. is displayed, a program guide corresponding to a channel range (e.g. 220 channel to 228 channel) including channel numbers which are lower than 224 channel and corresponding to a time zone (e.g. 9:00 p.m. to 1:00 a.m.) including a time after 11:00 p.m., is scrolled and displayed in response to a flick operation in a diagonal direction from the upper right to the lower left in the program guide area 341. When the program guide of 224 channel to 232 channel and of 7:00 p.m. to 11:00 p.m. is displayed, a program guide corresponding to a channel range (e.g. 228 channel to 236 channel) including channel numbers which are higher than 232 channel and corresponding to a time zone (e.g. 9:00 p.m. to 1:00 a.m.) including a time after 11:00 p.m., is scrolled and displayed in response to a flick operation in a diagonal direction from the lower right to the upper left in the program guide area 341.

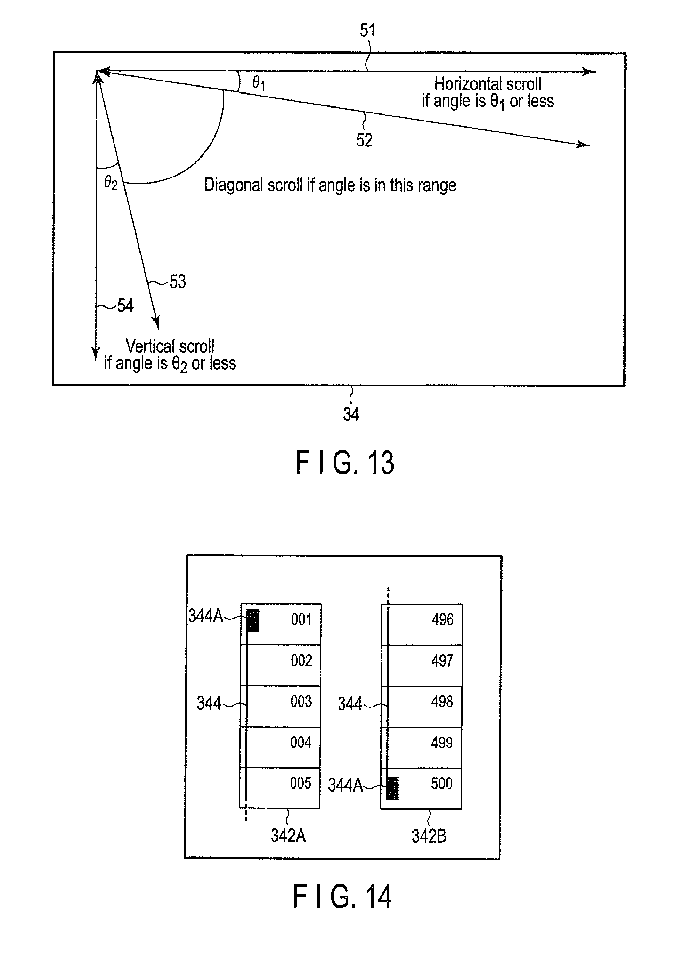

In the above-described scroll display, for example, the program guide is scrolled by a predetermined time and/or by a predetermined number of channels, each time a single flick operation is executed. In the meantime, the amount of movement of the time zone and/or the channel range in the scroll display may be determined based on the amount of movement, acceleration, etc. of the finger in the flick operation. A method of determining in which of the horizontal direction, vertical direction and diagonal direction the flick operation is executed, will be described later with reference to FIG. 13.

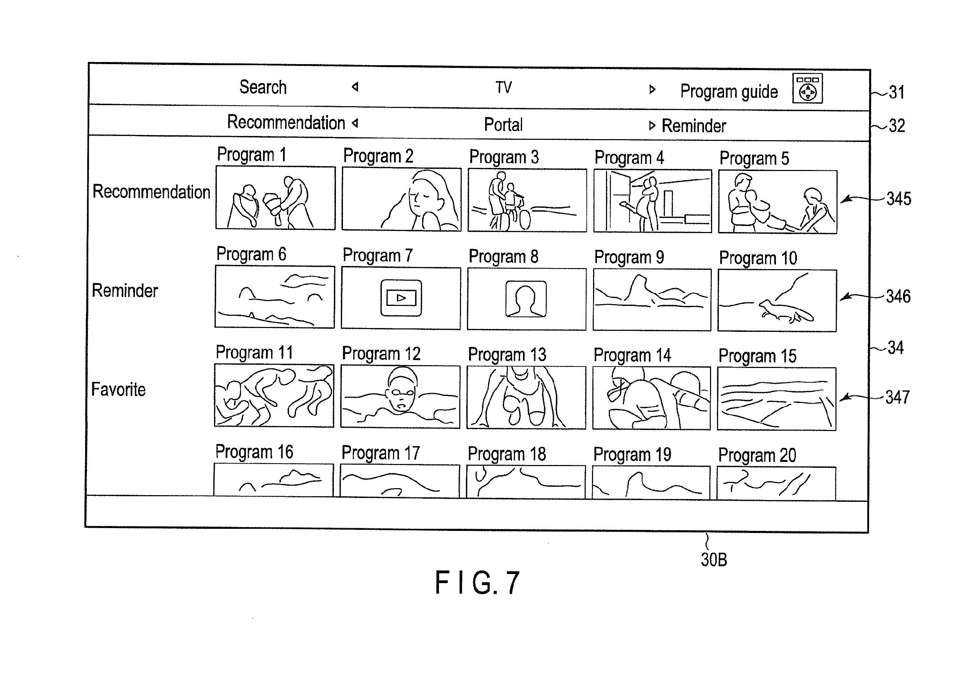

Next, FIG. 7 illustrates an example of the TV page 30B. On the TV page 30B, a list of thumbnail images (i.e. objects) representative of programs can be viewed. The TV page 30B includes, for example, a page switch area 31, a category switch area 32 and a content area 34. The content area 34 in the TV page 30B is also referred to as "program list display area".

The page switch area 31 is an area for inputting an operation of switching the TV page 30B to another page (program guide page 30A, movie page 30C, etc.). For example, the TV page 30B is switched to another page, responding to a flick operation (e.g. a horizontal flick operation) in the page switch area 31.

In the category switch area 32, a category ("Portal") corresponding to a list of programs (i.e. a list of thumbnail images corresponding to program), which are currently displayed in the program list display area (content area) 34, is displayed. Categories include, for instance, "Portal", "Recommendation", "Remind", and "Favorites". When "Recommendation" is selected, the program list display area 34 displays, for example, a list of programs of "Recommendation", which are selected by the server. When "Remind" is selected, the program list display area 34 displays, for example, a list of programs, the viewing of which has been programmed in advance by the user. When "Favorites" is selected, the program list display area 34 displays, for example, a list of programs which have been set in "Favorites" by the user. When "Portal" is selected, the program list display area 34 displays, for example, a list including thumbnail images 345 indicative of programs of "Recommendation", thumbnail images 346 indicative of programs of "Remind", and thumbnail images 347 indicative of programs of "Favorites".

In the category switch area 32, an operation of narrowing down the categories of programs displayed in the program list display area 34 is input. For example, responding to a flick operation (e.g. a horizontal flick operation) in the category switch area 32, the list including programs of the category of "Portal" is switched to a list including only programs of "Remind".

In addition, in the program list display area 34, for example, a list of thumbnail images corresponding to programs is displayed by using data of programs transmitted from the server. However, due to the size of the screen, the size of thumbnail images, the size (font size) of characters, etc., there is a limit to the number of thumbnail images which can be displayed at a time in the program list display area 34. Thus, the program list display area 34 displays a list including, for example, 15 thumbnails. In accordance with an operation on the program list display area 34, the range of thumbnail images, which are displayed in the program list display area 34, is altered.

In the program list display area 34, for example, an operation of scrolling the displayed list of thumbnail images is input. For example, responding to a flick operation in the program list display 34, the list of thumbnail images is scrolled and displayed. The list of thumbnail images is vertically scrolled in accordance with a vertical flick operation. In the meantime, the list of thumbnail images may be scrolled in the horizontal direction or in the diagonal direction in accordance with a horizontal or diagonal flick operation, respectively. A method of determining in which of the horizontal direction, vertical direction and diagonal direction the flick operation is executed, will be described later with reference to FIG. 13.

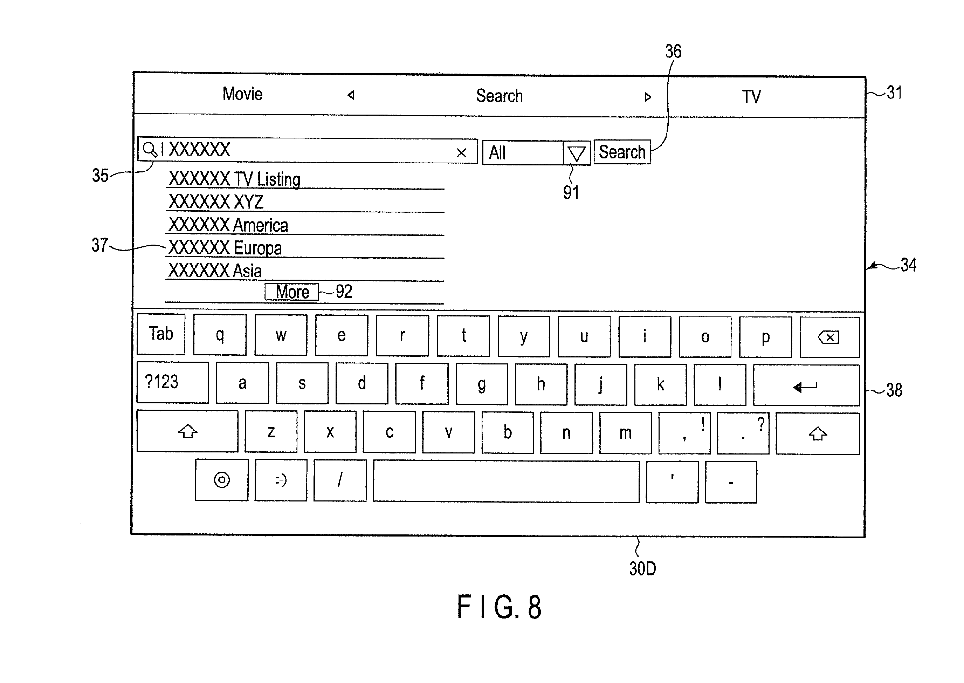

FIG. 8 illustrates an example of the search page 30D. On the search page 30D, for example, a search by a keyword, which is input by the user, is executed. The search page 30D includes a page switch area 31 and a content area 34. The page switch area 31 is an area for switching the search page 30D to another page (program guide page 30A, TV page 30B, etc.). For example, the search page 30D is switched to another page, responding to a flick operation in the page switch area 31.

The content area 34 includes a keyword input area 35, a search button 36, a search candidate area 37, a keyboard area 38, a category select button 91, and a "More" button 92. The keyword input area 35 is an area for inputting a character string for a search. The character string is input, for example, by using a software keyboard displayed in the keyboard area 38.

When a character string is input in the keyword input area 35, a list of candidates of search keywords including this character string is automatically displayed in the search candidate area 37. The candidates, which are displayed in the search candidate area 37, are dynamically varied each time the user inputs a character by using the software keyboard, etc. Then, when one of the candidates of search keywords in the candidate list has been clicked, the "contents" ("programs", "movies", "persons") in the EPG server are searched based on the clicked search keyboard, and the list of search results is displayed in the search candidate area 37. In addition, when the search button 36 has been pressed without clicking the candidate list of keywords, the "contents" in the EPG server are "fuzzy" searched based on the character string in the keyword input area 35, and the list of search results is displayed in the search candidate area 37.

Then, if one of the listed contents in the search candidate area 37 has been clicked, brief information relating to this content is displayed on a right part of the content area 34.

When the category select button 91 has been pressed, a category list is displayed, and the kind of contents, which are to be displayed in the search result list of "contents", can be narrowed down. In addition, if the number of candidates, which are displayed in the search candidate area 37, is larger than a predetermined number, the "More" button 92 is disposed, and the number of contents is indicated below the "More" button 92 on a kind-by-kind basis. In the search and acquisition of the above-described "list of candidates of search keywords", "list of contents" and "brief information", an inquiry is issued to the EPG server at each time.

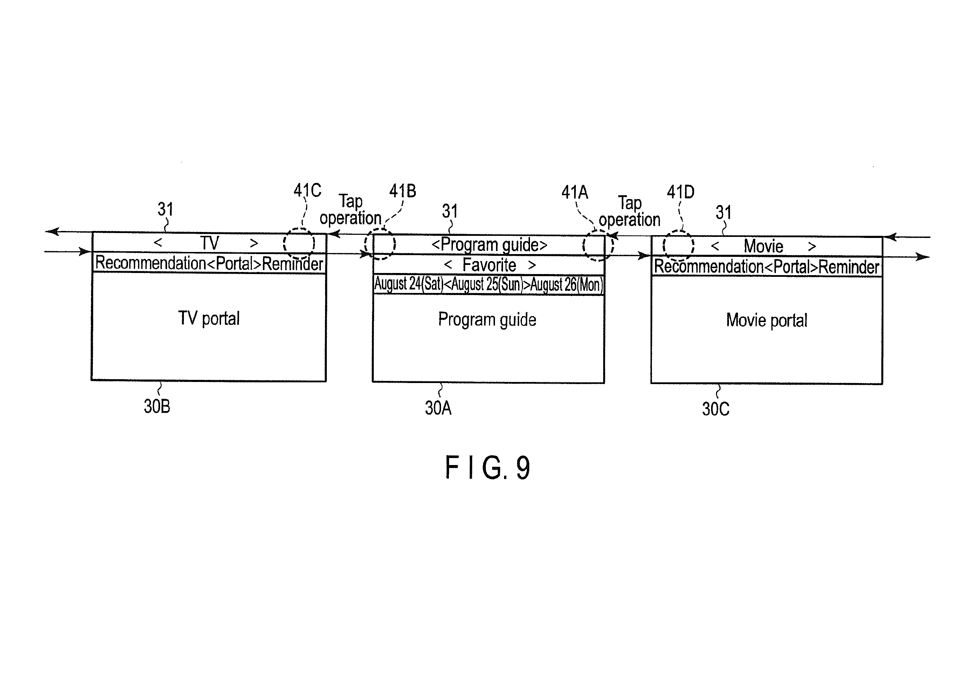

FIG. 9 illustrates an example of a screen transition in response to a tap operation on the page switch area 31. Also by an operation of tapping a left end or a right end of the page switch area 31, the screen (page) can be switched, as in the example shown in FIG. 5. For example, when the program guide page 30A is displayed, the program guide page 30A is switched to the movie page 30C in response to an operation of tapping a right end 41A in the page switch area 31. When the program guide page 30A is displayed, the program guide page 30A is switched to the TV page 30B in response to an operation of tapping a left end 41B in the page switch area 31. When the TV page 30B is displayed, the TV page 30B is switched to the program guide page 30A in response to an operation of tapping a right end 41C in the page switch area 31. When the movie page 30C is displayed, the movie page 30C is switched to the program guide page 30A in response to an operation of tapping a left end 41D in the page switch area 31. In the meantime, as regards the category switch area 32 and date switch area 33, the objects displayed in the content area 34 may similarly be changed in response to an operation of tapping a right end or a left end in these areas.

Next, FIG. 10 illustrates an example in which the content displayed in the content area 34 is switched in response to a flick operation in the category switch area 32. As described above, the category of programs (video contents), which are displayed in the content area 34, is narrowed down in response to a flick operation in the category switch area 32.

For example, when a program guide page 301 including the programs of the category of "All" is displayed, the program guide page 301 including the programs of the category of "All" is switched to a program guide page 302 including the programs of "For children" in response to a leftward flick operation 421 in the category switch area 32. When the program guide page 301 including the programs of the category of "All" is displayed, the program guide page 301 including the programs of the category of "All" is switched to a program guide page 303 including the programs of "Sports" in response to a rightward flick operation 422 in the category switch area 32. When the program guide page 303 including the programs of the category of "Sports" is displayed, the program guide page 303 including the programs of the category of "Sports" is switched to the program guide page 301 including the programs of "All" in response to a leftward flick operation 423 in the category switch area 32. When the program guide page 302 including the programs of the category of "For children" is displayed, the program guide page 302 including the programs of the category of "For children" is switched to the program guide page 301 including the programs of "All" in response to a rightward flick operation 424 in the category switch area 32. In the meantime, as regards the TV page 30B and movie page 30c, the category is similarly switched.

FIG. 11 illustrates an example in which the content displayed in the content area 34 is switched in response to a flick operation on the date switch area 33. As described above, the range of the date corresponding to the program guide, which is displayed in the content area 34, is switched in response to a flick operation in the date switch area 33.

For example, when the program guide page 301 including the programs which are broadcast on August 25 is displayed, the program guide page 301 is switched to a program guide page 304 including programs broadcast on August 26 in response to a leftward flick operation 431 in the date switch area 33. When the program guide page 301 including the programs broadcast on August 25 is displayed, the program guide page 301 is switched to a program guide page 305 including programs broadcast on August 24 in response to a rightward flick operation 432 in the date switch area 33. When the program guide page 305 including the programs broadcast on August 24 is displayed, the program guide page 305 is switched to the program guide page 301 including programs broadcast on August 25 in response to a leftward flick operation 433 in the date switch area 33. When the program guide page 304 including the programs broadcast on August 26 is displayed, the program guide page 304 is switched to the program guide page 301 including the programs broadcast on August 25 in response to a rightward flick operation 434 in the date switch area 33.

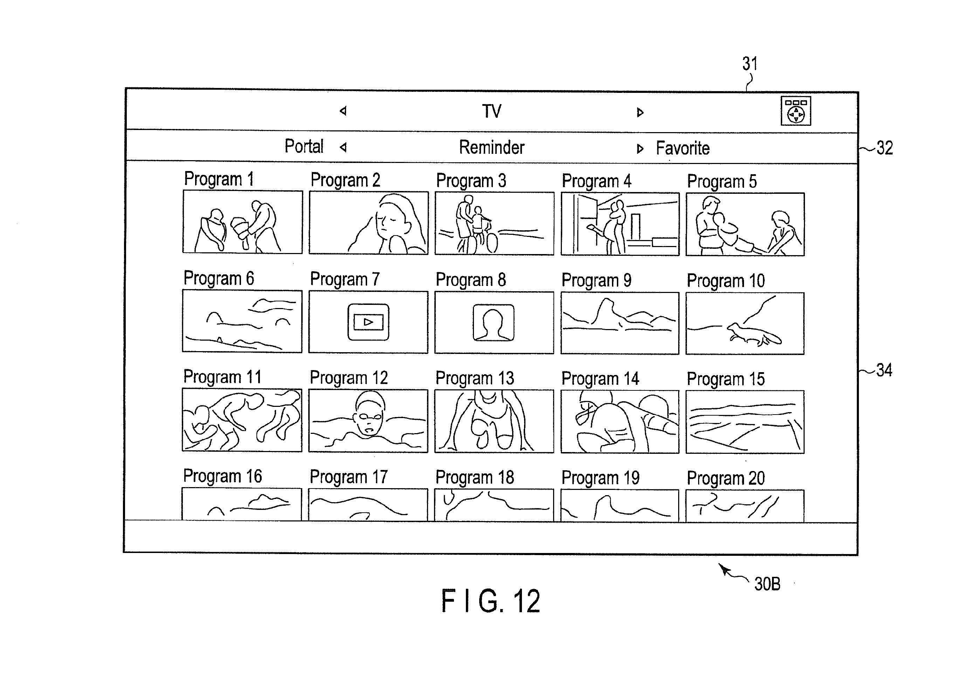

FIG. 12 illustrates an example of the TV page 30B which is displayed, responding to the switching of the category in the TV page 30B shown in FIG. 7. The TV page 30B shown in FIG. 12 is displayed, for example, responding to the execution of a leftward flick operation in the category switch area 32 in the TV page 30B shown in FIG. 5. Specifically, the display content in the TV page 30B is switched from the program list of "Portal" to the program list of "Remind". The user can select, for example, a program which is to be viewed or a program about which detailed information is to be checked, from the switched program list of "Remind".

Next, referring to FIG. 13, a description is given of a flick operation in an area which can be scrolled. As described above, the program guide area 341, channel area 342 and the time area 343 in the program guide page 30A, and the program list display area (content area) 34 in the TV page 30B, are scrolled and displayed in response to a flick operation.

Specifically, a flick operation with an angle of a first threshold θ₁ or less to a horizontal direction 51 on the screen is detected as a horizontal flick operation. When the horizontal flick operation has been detected, an object in an area (e.g. program guide area 341, time area 343, program list display area 34), which is horizontally scrollable, is horizontally scrolled and displayed.

In addition, a flick operation with an angle of a second threshold θ₂ or less to a vertical direction 54 on the screen is detected as a vertical flick operation. When the vertical flick operation has been detected, an object in an area (e.g. program guide area 341, channel area 342, program list display area 34), which is vertically scrollable, is vertically scrolled and displayed.

Besides, a flick operation with an angle in a range between a direction 52 and a direction 53 (i.e. a flick operation which is neither a flick operation with the first threshold θ₁ or less to the horizontal direction 51 nor a flick operation with an angle of the second threshold θ₂ or less to the vertical direction 54) is detected as an diagonal flick operation. When the diagonal flick operation has been detected, an object in an area (e.g. program guide area 341, program list display area 34), which is diagonally scrollable, is diagonally scrolled and displayed.

Next, FIG. 14 illustrates an example of the slide bar 344 for quickly scrolling the channel area 342. In some cases, the channel area 342 includes a great number of channels (e.g. 500 channels). It may possibly be time-consuming for the user to scroll such many channels by a flick operation.

Thus, the slide bar 344 has a function of quickly scrolling, by vertically moving a dial 344A, the range of channels displayed in the channel area 344, from a channel range (e.g. 001 channel to 005 channel) 342A including the lowest channel number to a channel range (e.g. 496 channel to 500 channel) 342B including the highest channel number. For example, when the dial 344A is positioned at an uppermost part of the slide bar 344, the channel range 342A including the lowest channel number is displayed in the channel area 344. When the dial 344A is positioned at a lowermost part of the slide bar 344, the channel range 342B including the highest channel number is displayed in the channel area 344. Specifically, since the length of the slide bar 344 is associated with the total number of channels, the channel range corresponding to the position of the dial 344A on the slide bar 344 is displayed in the channel area 342. Thereby, the user can easily vary the range of channels which are displayed in the channel area 342.

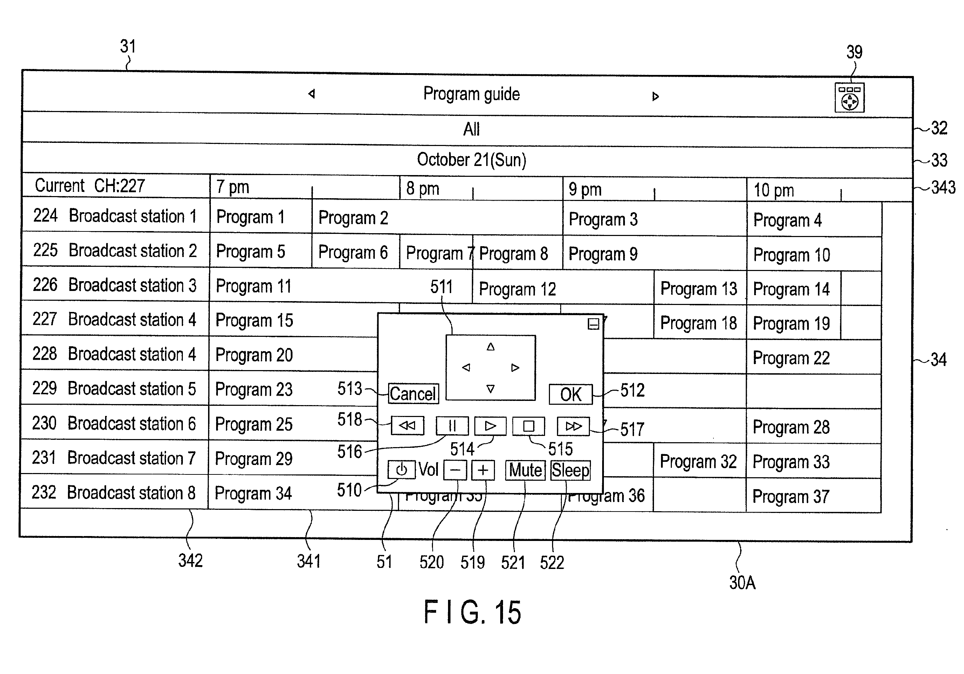

FIG. 15 illustrates an example of a remote-control screen 51 which is displayed on the program guide screen 30 (e.g. program guide page 30A). The remote-control screen 51 is displayed, for example, responding to pressing (tapping) of a remote-control button 39 provided in the program guide screen 30. The user can operate the video display device on which a program (video content) is displayed, by using various buttons provided in the remote-control screen 51. This video display device may be the computer 10 itself, or an external display device (e.g. television receiver) which is connected to the computer 10 via a network, etc.

The remote-control screen 51 includes, for example, a power button 510, a direction select button 511, an OK button 512, a cancel button 513, a play button 514, a stop button 515, a pause button 516, a fast forward button 517, a fast rewind button 518, volume buttons 519 and 520, a mute button 521, and a sleep button 522. The power button 510 is a button for switching power-on/power-off of the video display device. The direction select button 511, OK button 512 and cancel button 513 are buttons for manipulating various setup screens displayed on the video display device. The play button 514, stop button 515, pause button 516, fast forward button 517 and fast rewind button 518 are buttons for controlling playback of a program that is to be viewed. The volume buttons 519 and 520 and mute button 521 are buttons for controlling the volume of sound output from speakers on the video display device. The sleep button 522 is a button for setting the video display device in a sleep state. The user can easily operate the video display device by using the buttons in the remote-control screen 51.

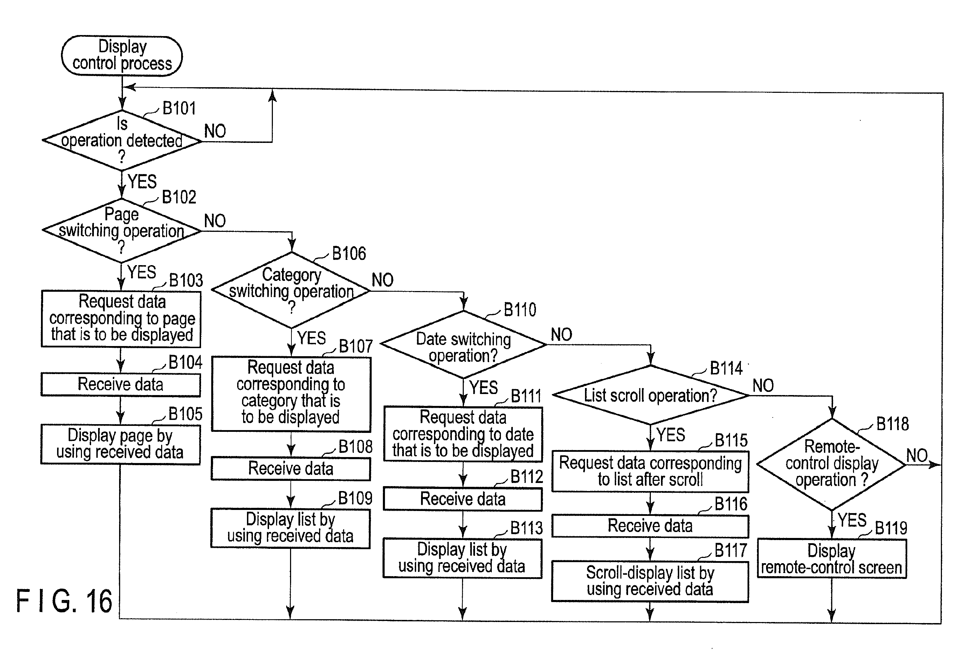

Next, referring to a flowchart of FIG. 16, a description is given of an example of the procedure of a display control process executed by the computer 10. In the description below, it is assumed that the program guide screen 30 is already displayed on the touch-screen display 17.

To start with, the operation detector 21 determines whether an operation using the touch panel 17B has been detected (block B101). When an operation using the touch panel 17B has not been detected (NO in block B101), the process returns to block B101, and it is determined once again whether an operation using the touch panel 17B has been detected.

When an operation using the touch panel 17B has been detected (YES in block B101), the operation determination module 22 determines whether the detected operation is an operation of switching a page (block B102). When the detected operation is an operation of switching a page (YES in block B102), the data transmitter/receiver 23 requests the server to transmit data corresponding to a page (i.e. a page after switching) which is to be displayed by the switching (block B103). The data transmitter/receiver 23 receives the data which has been transmitted from the server in response to the request (block B104). Then, the page switch module 241 displays a new page by using the received data (block B105). Incidentally, when the data corresponding to the page which is to be displayed by the switching has already been received (i.e. when this data is cached in the memory 103), there is no need to issue a request to the server, and the cached data may be used.

When the detected operation is not an operation of switching a page (NO in block B102), the operation determination module 22 determines whether the detected operation is an operation of switching a category of a list (block B106). When the detected operation is an operation of switching a category of a list (YES in block B106), the data transmitter/receiver 23 requests the server to transmit data corresponding to a category (i.e. a category after switching) which is to be displayed by the switching (block B107). The data transmitter/receiver 23 receives the data which has been transmitted from the server in response to the request (block B108). Then, the category switch module 242 displays a list of a new category by using the received data (block B109). Incidentally, when the data corresponding to the category which is to be displayed by the switching has already been received (i.e. when this data is cached in the memory 103), there is no need to issue a request to the server, and the cached data may be used.

When the detected operation is not an operation of switching a category of a list (NO in block B106), the operation determination module 22 determines whether the detected operation is an operation of switching a date of a list (block B110). When the detected operation is an operation of switching a date of a list (YES in block B110), the data transmitter/receiver 23 requests the server to transmit data corresponding to a date (i.e. a date after switching) which is to be displayed by the switching (block B111). The data transmitter/receiver 23 receives the data which has been transmitted from the server in response to the request (block B112). Then, the date switch module 243 displays a list of a new date by using the received data (block B113). Incidentally, when the data corresponding to the date which is to be displayed by the switching has already been received (i.e. when this data is cached in the memory 103), there is no need to issue a request to the server, and the cached data may be used.

When the detected operation is not an operation of switching a date of a list (NO in block B110), the operation determination module 22 determines whether the detected operation is an operation of scrolling a list (block B114). When the detected operation is an operation of scrolling a list (YES in block B114), the data transmitter/receiver 23 requests the server to transmit data corresponding to a list which is to be displayed by the scroll (block B115). The data transmitter/receiver 23 receives the data which has been transmitted from the server in response to the request (block B116). Then, the list scroll module 244 scrolls and displays a list by using the received data (block B117). Incidentally, when the data corresponding to the list which is to be displayed by the scroll has already been received (i.e. when this data is cached in the memory 103), there is no need to issue a request to the server, and the cached data may be used.

When the detected operation is not an operation of scrolling a list (NO in block B114), the operation determination module 22 determines whether the detected operation is an operation of displaying the remote-control screen 51 (block B118). When the detected operation is an operation of displaying the remote-control screen 51 (YES in block B118), the remote-control ON/OFF module 245 displays the remote-control screen 51 (block B119).

As has been described above, according to the present embodiment, a video content, which is to be viewed, can easily be selected by an intuitive operation using the touch-panel screen display 17. Responding to an operation using the touch panel 17B, the program guide application program 202 changes the content displayed on the program guide screen 30. By a simple and intuitive operation using the touch panel 17B, the program guide screen 30 including the content corresponding to the purpose of use is displayed. Thus, the user can easily confirm programs which can be viewed, or can easily program to view a program or to record a program.

All the procedures of the display control process according to this embodiment can be executed by software. Thus, the same advantageous effects as with the present embodiment can easily be obtained simply by installing a computer program, which executes the procedures of the display control process, into an ordinary computer through a computer-readable storage medium which stores the computer program, and by executing the computer program.

## Claims

1. An electronic apparatus **characterized by** comprising:
a touch-screen display (17);
a display controller (24) configured to display a first screen comprising a content area and a plurality of areas, wherein the content area comprises one or more objects indicative of one or more video content, and an operation to change an object in the content area is configured to be input in the plurality of areas; and
an operation detector (21) configured to detect with the touch-screen display (17) a first operation in a first area of the plurality of areas and a second operation in a second area of the plurality of areas,
wherein the display controller (24) is configured to display a second screen different from the first screen if the first operation is detected, and to change the one or more objects in the content area and display the content area comprising the changed object if the second operation is detected.

2. The electronic apparatus of Claim 1, **characterized in that** the content area comprises the one or more objects arranged based on a broadcast date or time and a broadcast channel of each of the one or more video contents.

3. The electronic apparatus of Claim 2, **characterized in that** the operation detector (21) is configured to further detect with the touch-screen display (17) a third operation in the content area, and
wherein the display controller (24) is configured to display the content area comprising a first object indicative of a first video content if the third operation is detected, the first video content different from the one or more video contents with respect to a broadcast date or time or a broadcast channel.

4. The electronic apparatus of Claim 3, **characterized in that** the first operation, the second operation, and the third operation are flick operations.

5. The electronic apparatus of Claim 2, **characterized in that** the operation detector (21) is configured to further detect with the touch-screen display (17) a third operation in the content area, and
wherein the display controller (24) is configured to scroll the one or more objects in the content area if the third operation is detected.

6. The electronic apparatus of Claim 5, **characterized in that** the display controller (24) is configured to horizontally scroll the one or more objects in the content area when the third operation is a flick operation with an angle less than a first threshold relative to a horizontal direction on the first screen.

7. The electronic apparatus of Claim 5, **characterized in that** the display controller (24) is configured to vertically scroll the one or more objects in the content area when the third operation is a flick operation with an angle less than a second threshold relative to a vertical direction on the first screen.

8. The electronic apparatus of Claim 5, **characterized in that** the display controller (24) is configured to diagonally scroll the one or more objects in the content area when the third operation is neither a first flick operation with an angle less than first threshold relative to a horizontal direction on the first screen nor a second flick operation with an angle less than second threshold relative to a vertical direction on the first screen.

9. The electronic apparatus of Claim 2, **characterized in that** the content area further comprises a slide bar,
wherein the operation detector (21) is configured to further detect with the touch-screen display an operation on the slide bar, and
wherein the display controller (24) is configured to scroll the one or more objects in the content area if the operation on the slide bar is detected.

10. The electronic apparatus of Claim 2, **characterized in that** the display controller (24) is configured to detect, if the second operation is detected, a channel which satisfies a condition from among one or more channels on which the one or more video contents are broadcast, and to display the content area comprising an object indicative of a video content broadcast on the detected channel.

11. The electronic apparatus of Claim 2, **characterized in that** the operation detector (21) is configured to further detect with the touch-screen display (17) a fourth operation in a third area of the plurality of areas,
wherein the one or more video contents are broadcast in a first time zone, and
wherein the display controller (24) is configured to display the content area if the fourth operation is detected, the content area comprising one or more objects indicative of one or more video contents broadcast in a second time zone earlier than the first time zone by a first time or comprising one or more objects indicative of one or more video contents broadcast in a third time zone later than the first time zone by the first time.

12. The electronic apparatus of Claim 11, **characterized in that** the first operation, the second operation, and the fourth operation are tap operations.

13. The electronic apparatus of Claim 1, **characterized in that** the display controller (24) is configured to display, if the first operation is detected, the second screen after display of an effect indicative of a switch from the first screen to the second screen.

14. A display control method of controlling a screen displayed on an electronic apparatus, the method **characterized by** comprising:
displaying a first screen comprising a content area and a plurality of areas, wherein the content area comprises one or more objects indicative of one or more video contents, and an operation to change an object in the content area is configured to be input in the plurality of areas; and
detecting with a touch-screen display (17) a first operation in a first area of the plurality of areas and a second operation in a second area of the plurality of areas,
wherein the displaying comprises displaying a second screen different from the first screen if the first operation has been detected, and to change the one or more objects in the content area and display the content area comprising the changed object if the second operation has been detected.

15. A computer-readable, non-transitory storage medium having stored thereon a program for controlling a screen displayed on a computer, the program controlling the computer to execute functions of:
displaying a first screen **characterized by** comprising a content area and a plurality of areas, wherein the content area comprises one or more objects indicative of one or more video contents, and an operation to change an object in the content area is configured to be input in the plurality of areas; and
detecting with a touch-screen display (17) a first operation in a first area of the plurality of areas and a second operation in a second area of the plurality of areas,
wherein the displaying comprises displaying a second screen different from the first screen if the first operation has been detected, and to change the one or more objects in the content area and display the content area comprising the changed object if the second operation has been detected.
